# EUROPEAN PATENT SPECIFICATION

(11) **EP 2 040 142 B1**
(45) Date of publication and mention of the grant of the patent: **11.07.2012**
(21) Application number: 08016136.7
(22) Date of filing: 12.09.2008
(51) Int. Cl.: G06F 1/16, H04N 5/64

(54) **Display**
Anzeige
Écran

(30) Priority: 13.09.2007 JP 2007238457
(43) Date of publication of application: 25.03.2009
(73) Proprietor: Funai Electric Co., Ltd., Daito-shi, Osaka 574-0013 (JP)
(72) Inventor: Akira, Yokawa, Daito-shi Osaka 574-0013 (JP)
(74) Representative: Grünecker, Kinkeldey, Stockmair & Schwanhäusser

(56) References cited:
- US-A- 5 995 170
- US-A1- 2004 223 297
- US-A1- 2006 223 347
- US-A1- 2007 201 196

## Description

### BACKGROUND OF THE INVENTION

### 1. Field of the Invention

The present invention relates to a display according to the preamble of claim 1. Such a display is known from US 2004/0223297.

### 2. Description of the Related Art

A known display displays images on a display panel having a front surface exposed in a window formed in a front part of a cabinet. The cabinet of the display includes a front cabinet, namely, a front part of the cabinet, provided with the window, and a rear cabinet, namely a rear part of the cabinet. The display is assembled by as assembling method including the steps of fixing the display panel to the front cabinet with its front surface exposed in the window, and fastening the rear cabinet to the front cabinet with fixing members.

A conventional method of fixing the display panel to the front cabinet uses fixing members. The same fixing members are used for fixing each of display panels respectively having different thicknesses. The fixing members are those specially for fixing display panels to front cabinets, other than general fixing members, such as screws and washers.

A technique disclosed in, for example, Japanese Unexamined Patent Application Publication (JP-A) No. 1997-311319 (hereinafter referred to as "Patent document 1") puts holding members on the four corners of a display panel, and fastens the holding member to a rear cabinet with screws.

A technique disclosed in, for example, Japanese Utility Model Registration Application No. 3111670 (hereinafter referred to as "Patent document 2") sandwiches corners of a display panel between two spacers, and fastens the spacers to a front cabinet with screws without changing the position of the spacers relative to the display panel.

A technique disclosed in JP-A 2001-305982 (hereinafter, referred to as "Patent document 3") puts holding members on four corners of a display panel and fastens the holding members to a rear cabinet with screws.

A technique disclosed in, for example, Japanese Unexamined Utility Model Registration Application Publication No. 1987-186488 (hereinafter, referred to as "Patent document 4"), which is not a technique for fixing a display panel to a cabinet, fits a display panel in members extended on a wall and slits formed by disposing bosses at predetermined positions, presses the wiring board against the wall, and fixes the wiring board to the wall. Washers are put on screws, respectively, and screws are screwed into the members or the bosses with the back surfaces of the washers in contact with the display panel such that the washers presses the wiring board fitted in the slits against the wall.

The Patent documents 1 to 3 have the following problems. All the technique disclosed in Patent document 1 to 3 need fixing members for fixing the display panel to the cabinet. Therefore, those techniques need to assemble many parts requiring much assembling work. The fixing members necessary for fixing the display panel to the cabinet increase the cost

The technique disclosed in Patent document 4 is not a technique for fixing a display panel to a cabinet.

### SUMMARY

The present invention has been made in view of those problems and it is therefore an object of the present invention to provide a display including a front cabinet to which any one of display panels respectively having different thicknesses can be fixed without using other members..

A display in one aspect of the present invention having a front cabinet provided with a substantially rectangular window in which a front surface of a thin display panel disposed in the front cabinet is substantially exposed,
a holding structure, including plurality of bosses with axially threaded holes, with the plurality of bosses protruding from a boundary of a display panel holding area on a back surface of the front cabinet;
positioning ribs, protruding from the back surface of the front cabinet so as to be in contact with a perimeter of a display panel placed in the front cabinet to position the display panel in the front cabinet; and
screwing members, with each screwing member having a threaded part capable of being screwed into the threaded hole of each boss of plurality of bosses, and a pressing part, extending about the axis of the threaded part;
the plural of bosses of the holding structure are divided into sets, each of the adjacently arranged bosses respectively having different lengths respectively for display panels respectively having different thicknesses,
a display panel is positioned in the front cabinet by the positioning ribs,
the screwing members are screwed into the threaded holes of the plurality of bosses of a length substantially equal to a thickness of a display panel positioned in the front cabinet to hold the display panel fixedly between the back surfaces of the pressing parts of the screwing members and the back surface of the front cabinet.

The present invention relates to the thus formed display in which a thin display panel is disposed in the front cabinet with its front surface exposed in the substantially rectangular window of the front cabinet. This display includes: the holding structure including plurality of bosses protruding from the boundary of the panel holding area on the back surface of the front cabinet and provided with axially threaded holes, respectively, the positioning ribs protruding from the back surface of the front cabinet so as to be in contact with the perimeter of a display panel placed in the front cabinet to position the display panel in the front cabinet, and the screwing members having threaded parts capable of being screwed into the threaded holes of the bosses, respectively, and the pressing parts extending about the axes of the threaded shanks, respectively. The plurality of the bosses of the holding structure are divided into sets each of the adjacently arranged bosses respectively having different lengths respectively for display panels respectively having different thicknesses.

A display panel can be fixedly held between the back surfaces of the pressing parts of the screwing members and the back surface of the front cabinet by positioning the display panel in the front cabinet by the positioning ribs, screwing the screwing members into the threaded holes of the bosses of the length substantially equal to the thickness of the display panel disposed in the front cabinet.
In other words, the display panel is fixed to the front cabinet by the positioning ribs and the screwing members each having the threaded part and the pressing part. Therefore, any additional fixing members are not necessary when generally available members, such as washers, are used as the pressing parts. Thus the display can be formed by assembling a small number of parts by less assembling work. Fixing members are not necessary and hence the cost can be reduced accordingly.

As apparent from the foregoing description, according to the present invention, the front cabinet can be used for fixedly holding any one of display panels respectively having different thicknesses.

Preferably, a support rib having a length substantially equal to that of each of the bosses is formed near the boss, and the screwing member is screwed into the threaded hole of the boss such that the back surface of the pressing part of the screwing member is held near the upper end of the rib. When the screwing members are screwed into the threaded holes of the bosses to hold a display panel between the back surfaces of the pressing parts and the back surface of the front cabinet, parts, not in contact with the display panel, of the pressing parts are held near the upper ends of the support ribs, respectively. Thus, the back surfaces of the pressing parts are substantially parallel to the back surfaces of the display panel. Therefore, it is possible to prevent failure in exerting force on the display panel by the back surfaces of the pressing parts when the screwing members are screwed into the threaded holes of the bosses, and the display panel can be surely fixed to the front cabinet.

Preferably, each support rib has a T-shaped top surface.

Since the pressing parts rest on the T-shaped top surfaces when the screwing members are screwed into the threaded holes of the bosses, the screwing members can surely exert force through the pressing parts on the display panel.

Preferably, the back surface of the pressing part of each screwing member is formed such that high frictional force acts between the back surface of the pressing part and the back surface of the display panel. Since high frictional force acts between the back surface of the pressing part and the back surface of the display panel when the screwing member is screwed into the threaded hole of the boss, it is possible to prevent failure in exerting force on the display panel by the back surfaces of the pressing parts when the screwing members are screwed into the threaded holes of the bosses, and the display panel can be surely fixed to the front cabinet.

According to another aspect of the present invention, the display includes : a display panel having the shape of a thin box, a wiring board, for giving received signals to the display panel and supplying power to the display panel, attached to the back surface of the display panel; a rear cabinet joined to the back end of the front cabinet; and support ribs disposed near the bosses, respectively, and each having a length substantially equal to that of the boss adjacent thereto; wherein the pressing parts are washers, each of the support ribs has a T-shaped top surface, the back surface of the pressing part of the screwing member is supported on the T-shaped top surface of the support rib when the screwing member is screwed into the threaded hole of the boss, the pressing part is provided in its back surface with projections projecting from the back surface so that high frictional force may act between the back surface of the pressing part and the display panel.

### BRIEF DESCRIPTION OF THE DRAWINGS

Fig. 1 is an exploded perspective view of a display in a preferred embodiment according to the present invention;
Fig. 2 is a fragmentary sectional view in a vertical plane of a display panel fixed to a front cabinet;
Fig. 3 is a rear view of the front cabinet;
Fig. 4 is a view of assistance in explaining a positioning rib included in the preferred embodiment;
Fig. 5 is a perspective view of assistance in explaining a holding structure included in the preferred embodiment;
Fig. 6 is a perspective view of a screwing member; and
Pigs 7A and 7B are fragmentary sectional views of assistance in explaining a method of fixing display panels having different thicknesses, respectively, to the front cabinet.

### DETAILED DESCRIPTION OF THE PREFERRED EMBODIMENT

A preferred embodiment of the present invention and modifications will be described with reference to the accompanying drawings in the following order.
(1) Embodiment
(2) Modifications

### Embodiment

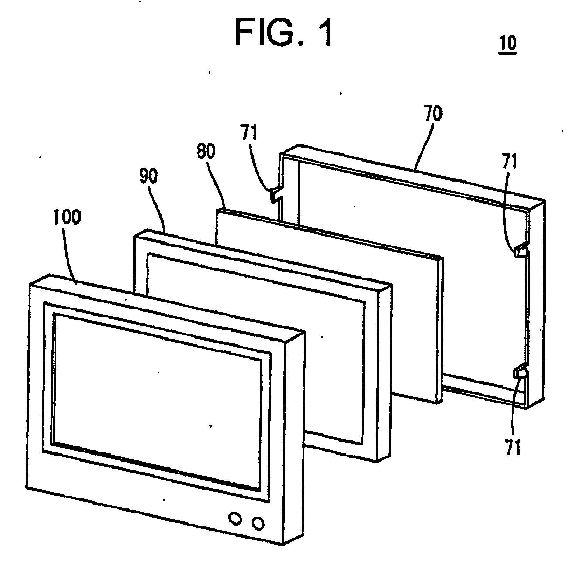

A display 10 in a preferred embodiment according to the present invention will be described with preference to the accompanying drawings. Fig. 1 shows the display 10. The display 10 has a cabinet including a front cabinet 100 and a rear cabinet 70, a display panel 90 for displaying images, and a wiring board 80 for electrically controlling operations of the display 10.

The display panel 90 includes devices for displaying images. A panel body that displays pictures and characters represented by analog or digital signals is a principal component of the display panel 90. In the present invention, display panel 90 includes other devices for driving the panel body. Suppose that the panel body is a liquid crystal panel. Then, those devices are a backlight unit for illuminating the panel body from behind the panel body, a bezel as a protective frame for protecting the panel body, a back frame and such. The following description will be made on an assumption that the panel body is a liquid crystal panel . However, the panel body is not limited to a liquid crystal panel and may be, for example, a plasma display panel (PDP) or a light-emitting diode panel (LEDP).

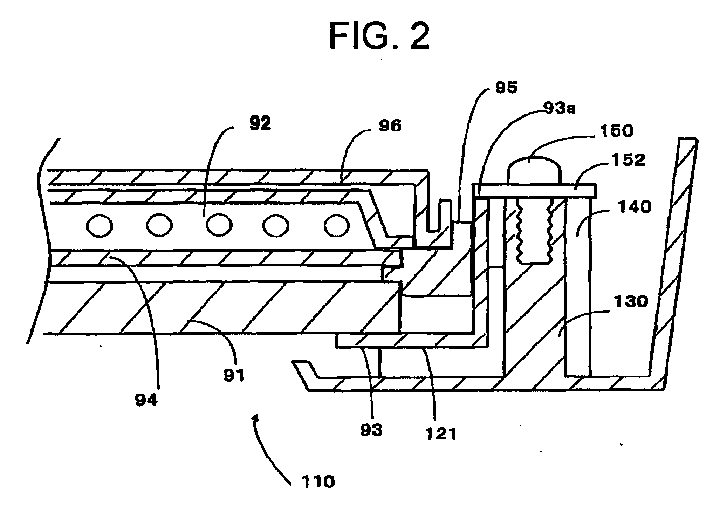

Pig. 2 is a fragmentary sectional view in a vertical plane of the display panel 90 fixed to the front cabinet 100. The display panel 90 displays images represented by digital signals controlled by the wiring board 80. As shown in Fig. 2, the display panel 90 has the shape of a thin box. As mentioned above, the display panel 90 includes a panel body 91, a backlight unit 92, a bezel 93, an optical sheet 94, a positioning frame 95 and a back frame 96.

In the display panel 90, the optical sheet 94 disposed behind the panel body 91, and the backlight unit 92 is disposed on the back surface of the optical sheet 94. The panel body 91, the optical sheet 94 and the backlight unit 92 are fixedly held by the positioning frame 95 in a predetermined positional relation. The panel body 91, the optical sheet 94 and the backlight unit 92 held in the predetermined positional relation are covered with the bezel 93 from the front side and with the back frame 96 from the back side. The panel body 91 displays images on its front surface on the front side. The bezel 93 is a reinforcing frame for covering the panel body 91 from the front side. The optical sheet 94 has a function to absorb or reflect light in a predetermined wavelength range in addition to a function to diffuse light emitted by the backlight unit 92 to enhance brightness. The components of the display panel 90 are fixed by, for example, fixing side parts thereof with screws.

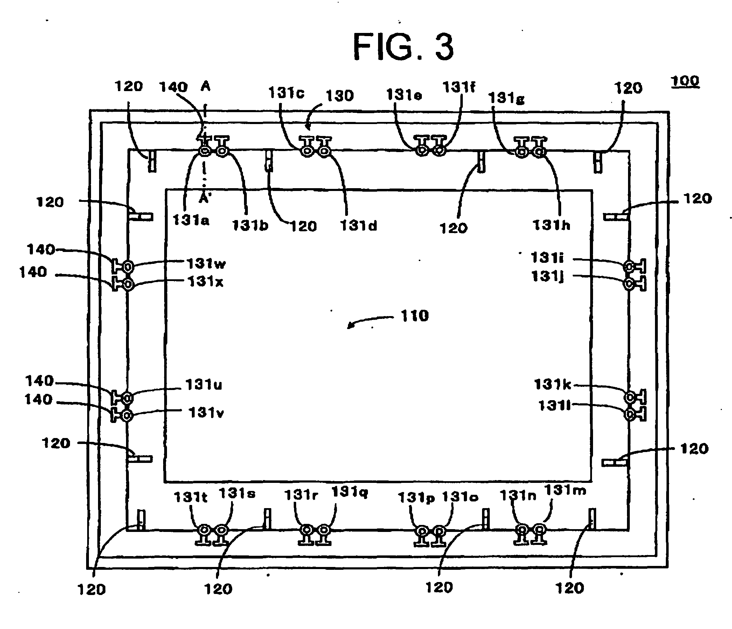

The front cabinet 100 is a front part of a cabinet. The display panel 90 is fastened to the front panel with screwing members 150. Fig. 3 is a rear view of the front cabinet 100. The front cabinet 100 of the display 10 has the shape of a thin box having one open end. The front cabinet 100 has a front wall opposite the open end and provided with a substantially rectangular window 110 in which the front surface of the display panel 90 is exposed, positioning ribs 120 for positioning the display panel 90 in the front cabinet 90 with the front surface thereof exposed in the window 110, a holding structure 130, for fixedly holding the display panel 90 placed in the front cabinet 100, including plural bosses 131a to 131x, and support ribs 140 on which screwing members 150, which will be described layer, screwed into threaded holes 132 of the bosses 131a to 131x rest. The back surface of the front cabinet 100 is opposite the front surface of the same in which the front surface of the display panel 90 is exposed. Preferably, the holding structure 130 and the positioning ribs 120 are formed integrally with the front cabinet 100.

In this embodiment, the four positioning ribs 120 are arranged in each of the upper and the lower side of the front cabinet 100 as shown in Fig. 3, and the two positioning ribs 120 are arranged in each of the right and the left side of the front cabinet 100 as shown in Pig. 3. In the holding structure 130, the eight bosses are arranged in each of the upper and the lower side of the front cabinet 100, and the four bosses are arranged in the right and the left side of the front cabinet 100. The bosses 131a to 131x are disposed so as to lie near the perimeter of the display panel 90 mounted on the front cabinet 100. The positioning ribs 120 are arranged such that the free ends thereof are in contact with the perimeter of the display panel 90 mounted on the front cabinet 100.

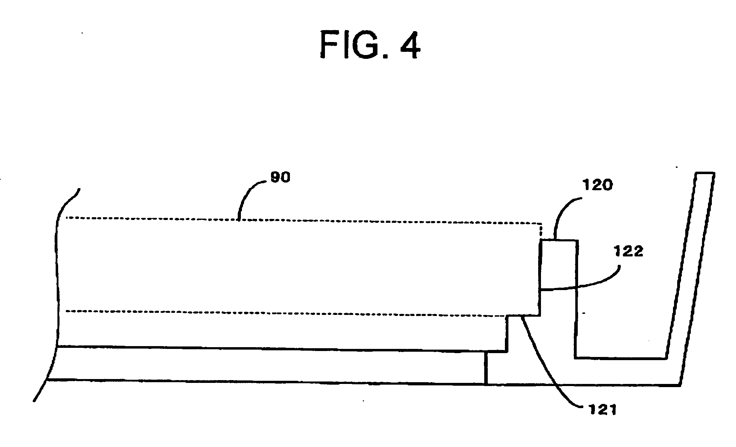

The positioning ribs 120 positions the display panel 90 at a predetermined position in the front cabinet 100. Fig. 4 is a view of assistance in explaining the positioning rib 120 included in this embodiment. In Fig. 4, the display panel 90 mounted on the front cabinet 100 is indicated by dotted lines. Each positioning rib 120 is a part rising from the back surface of the front cabinet 100 and having the shape of a thin plate. An inner part of a tip part of the positioning rib 120 is cut to form a step 121. The positioning rib 120 has an L-shape. The step 121 and an end surface 122 rising from the step 121 positions the display panel 90. More concretely, a part of the front surface of the display panel 90 is seated on the step 121, and a part of a side surface of the display panel 90 is brought into contact with the end surface 122. Thus, the display panel 90 is disposed on the back surface of the front cabinet 100 with the side edges thereof in contact with the end surfaces 122 of the positioning ribs 120.

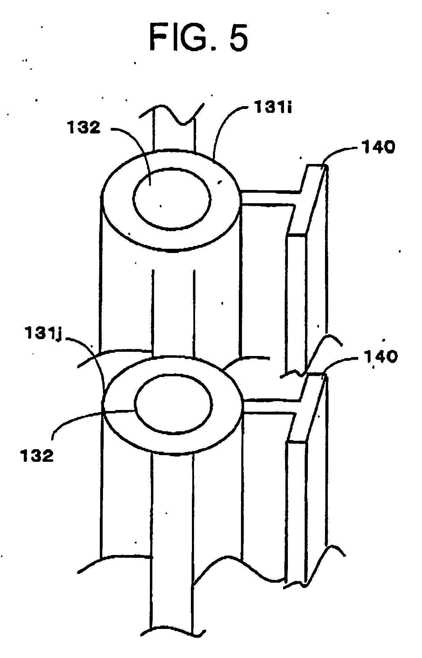

The holding structure 130 holds the display panel 90 fixedly in the front cabinet 100. Fig. 5 is a perspective view of assistance in explaining the holding structure 130 included in this embodiment. Referring to Fig. 5, the holding structure 130 has the plural bosses 131a to 131x. The bosses 131a to 131x are cylindrical parts rising from the back surface of the front cabinet 100 and are provided with axial threaded holes 132, respectively. Screwing members 150, which will be described later, are screwed into the threaded holes 132, respectively. As shown in Fig. 3, the bosses respectively having different lengths, such as the bosses 131i and 131j, are disposed contiguously. The sets each of the two bosses respectively having different lengths are used for holding two display panels respectively having different thicknesses, respectively. The lengths of bosses are determined so as to be suitable for holding the two display panels, respectively.

Desirably, the bosses 131a to 131x and the positioning ribs 120 are not disposed at the same positions, respectively, on the back surface of the front cabinet 100 to avoid the breakage of the bosses 131a to 131x due to the transmission of shocks exerted on the positioning ribs 120 to the bosses 131a to 131x. For example, a state where the boss 131a of the holding structure 130 and the positioning rib 120 are at the same position is a state where the boss 131a and the positioning rib 120 are on a two-dot chain line AA' shown in Fig. 3 and the boss 131a and the positioning rib 120 are formed in a single member.

The support ribs 140 support the screwing members 150, which will be described later, screwed into the threaded holes 132 of the bosses 131a to 131x, respectively. As shown in Pig. 5, the support ribs 140 are plate-shaped parts rising from the back surface of the front cabinet 100. The respective lengths of the support ribs 140 are substantially equal to those of the adjacent ones of the bosses 131a to 131x, respectively. The support ribs 140 are combined with the bosses 131a to 131x, respectively. Therefore, the support ribs 140 have lengths substantially equal to those of the adjacent ones of the bosses 131a to 131x. Each of the support ribs 140 has a T-shaped top surface (substantially T-shaped top surface). Although the support ribs 140 and the bosses 131a to 131x respectively adjacent to the support ribs 140 are integrated in parts, respectively, the support ribs 140 and the bosses 131a to 131x may be formed separately.

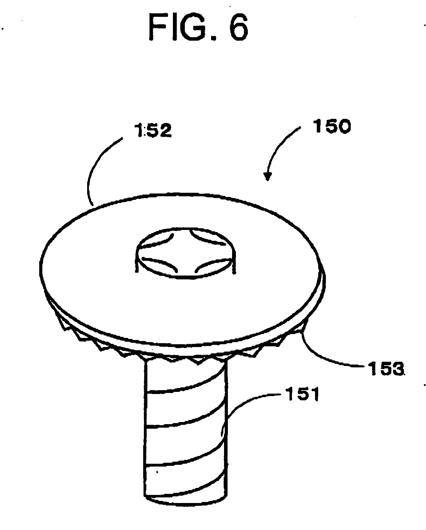

The screwing members 150 are screwed into the threaded holes 132 of the bosses 131a to 131x to fasten the display panel 90 to the front cabinet 100. Fig. 6 is a perspective view of assistance in explaining the screwing member 150. As shown in Fig. 6, the screwing member 150 has a threaded shank 151 and a pressing part 152 extending about the axes of the threaded shank 151. In this embodiment, the threaded shanks 151 are provided with screw threads capable of being engaged in the threaded holes 132 of the bosses 131a to 131x, respectively, and the pressing parts 152 are thin, tubular washers or the like. The screwing member 150 is formed by passing the threaded shank 151 through the opening of the washer. In this embodiment, the pressing part 152 is provided on its back surface with projections 153 projecting in a direction of the thickness of the pressing part 152.

The rear cabinet 70 is joined to the open rear end of the front cabinet 100 to form a back part of the cabinet. The rear cabinet 70 has the shape of a thin box having an open end. Joining parts 71 that engage with the front cabinet 100 are formed integrally with side walls of the rear cabinet 70.

The wiring board 80 controls received signals to display images on the display panel 90. The wiring board 80 includes a digital processing unit for controlling received signals, and a power unit, such as a stabilized power unit, for supplying power to the component parts. For example, the digital processing unit includes a tuner, a front end unit, a decoder and an image processing unit. The digital processing unit demodulates received, broadcast television signals, and gives signals obtained by demodulating the received, broadcast television signals to the display panel 90. The display panel 90 obtains analog signals through the digital-to-analog conversion of the received signals to display images. The power unit stabilizes the voltage of power received from an external power supply and supplies power of a stabilized voltage to the display panel 90 and the wiring board 80.

A method of assembling the display of the present invention will be described bellow.

The wiring board 80 is fastened to the back surface of the display panel 90 with screws. As shown in Fig. 2 by way of example, the wiring board 80 is fastened to a holding member, not shown, formed on the back frame 96 with screws. The display panel 90 is put in the front cabinet 100 such that the display surface of the display panel 90 is exposed in the window 110 of the front cabinet 100. Then, the screwing members 150 are screwed into the threaded holes 132 of the bosses 131a to 131x to fix the display panel 90 to the front cabinet 100.

As shown in Pig. 2, the back surfaces of the pressing parts 152 of the screwing members 150 are in contact with the edge 93a of the bezel 93 of the display panel 90 to press the display panel 90 against the back surface of the front cabinet 100. Thus, the display panel 90 is held between the back surface of the front cabinet 100 and the back surfaces of the pressing parts 152. In this embodiment, a state where the display panel 90 is held between the back surface of the front cabinet 100 and the back surfaces of the pressing parts 152 is a state where the display panel 90 is held between the steps 121 of the positioning ribs 120 and the back surface of the pressing parts 152. Naturally, the positioning ribs 120 are omitted in some cases and display panel 90 does not necessarily held in such a state.

In this display 10, either of the display panels 90 respectively having different thicknesses can be fixed to the front cabinet 100. More concretely, the screwing members are screwed selectively into the threaded holds 132 of suitable ones of the bosses 131a to 131x selected according to the thickness of the display panel 90. In this embodiment, the thickness of the display panel 90 is a dimension between the front surface of the bezel 93 and the rear edge 93a (Fig. 2) of the bezel 93.

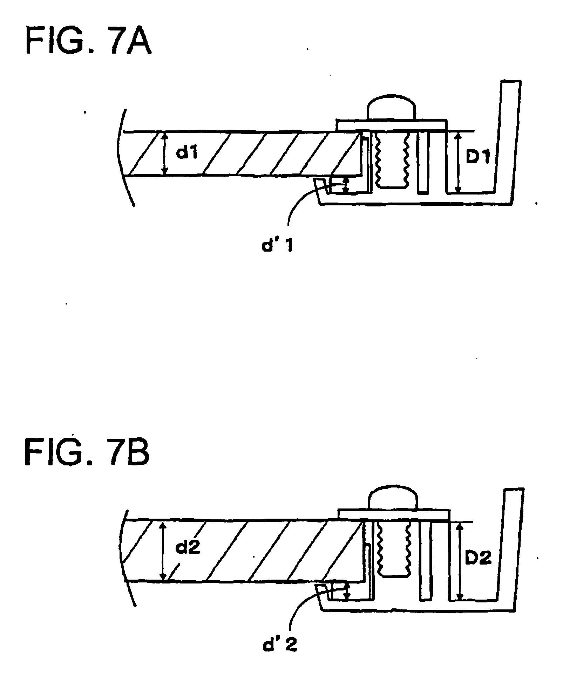

Figs. 7A and 7B are views of assistance in explaining a method of fixing display panels 90 respectively having different thicknesses d1 and d2 (d1 < d2) to the front cabinet 100. Fig. 7A shows the display panel 90 having the thickness d1 to the front cabinet 100 by using the bosses 131j. Fig. 7B shows the display panel 90 having the thickness d2 to the front cabinet 100 by using the bosses 131i. The bosses 131j are shorter than the bosses 131i.

In Fig. 7A, the height D1 of the boss 131j from the back surface of the front cabinet 100 is substantially equal to the sum of the height d'1 of the step 121 of the positioning rib 120 from the back surface of the front cabinet 100 and the thickness d1 of the display panel 90. Therefore, the back surfaces of the pressing part 152 is brought into contact with the edge of the display panel 90 when the screwing member 150 is screwed into the threaded hole 132 of the boss 131j. Thus, the pressing part 152 presses the display panel 90 against the back surface of the front cabinet 100 to hold the display panel 90 between the step 121 of the positioning rib 120 and the pressing part 152 when the screwing member 150 is screwed into the threaded holes 132 of the boss 131j.

Apart, not in contact with the display panel 90, of the pressing part 152 is in contact with the top surface of the support rib 140. Thus, the pressing part 152 is held with its back surface extended substantially parallel to the contact surface of the display panel 90. Such contact surface means a surface to which the back surface of the pressing part 152 contacts. Consequently, frictional force acting on the back surface of the pressing part 152 can be effectively used. Preferable, the height D1 of the boss 131j and the support rib 140 is slightly shorter than the sum of the height d'1 of the step 121 of the positioning rib 120 and the thickness d1 of the display panel 90, namely, d1 + d'1.

Similarly, as shown in Fig. 7B, the height D2 of the boss 131i from the back surface of the front cabinet 100 is substantially equal to the sum of the height d'2 of the step 121 of the positioning rib 120 and the thickness d2 of the display panel 90, namely, d2 + d'2. Therefore, the back surfaces of the pressing part 152 is brought into contact with the edge of the display panel 90 when the screwing member 150 is screwed into the threaded hole 132 of the boss 131i. Thus, the display panel 90 is held between the step 121 of the positioning rib 120 and the pressing part 152 when the screwing member 150 is screwed into the threaded holes 132 of the boss 131i to fix the display panel 90 to the front cabinet 100. Either of the display panels 90 respectively having different thicknesses can be fixed to the front cabinet 100 by selectively using the bosses respectively having different lengths.

After fixing the display panel 90 to the front cabinet 100, the respective open ends of the front cabinet 100 and the rear cabinet 70 are joined and the front cabinet 100 and the rear cabinet 70 are fastened together. More concretely, the joining parts 71 in the side walls of the rear cabinet 70 are fitted in openings, not shown, formed in the front cabinet 100 to join the front cabinet 100 and the rear cabinet 70 correctly together. Then, the front cabinet 100 and the rear cabinet 70 are fastened together with screws to complete the cabinet of the display 10. The display panel 90 and the wiring board 80 are held at predetermined positions, respectively, in the cabinet.

### Modifications

The present invention allows various modifications.

In the foregoing embodiment, the bosses 131a to 131x are divided into sets each of the two bosses of different lengths. The number of the bosses of each set is not limited to two, the number of the bosses of each set may be changed according to the number of display panels 90 respectively having different thicknesses.

The shape of the top surfaces of the support ribs 140 is not limited to a T-shape; the top surfaces of the support ribs 140 may be formed in any suitable shape, provided that the pressing parts 152 of the screwing members 130 can be held with their back surfaces extended substantially parallel to the contact surface of the display panel 90 when the screwing members 150 are screwed into the threaded holes 132 of the bosses 131a to 131x.

## Claims

1. A display (10), comprising:
a front cabinet (100) provided with a substantially rectangular window (110) in which a front surface of a thin display panel (90) disposed in the front cabinet (100) is substantially exposed,
a holding structure (130), including a plurality of bosses (131a -131x) with axially threaded holes (132), with the plurality of bosses (131a -131x) protruding from a boundary of a display panel holding area on a back surface of the front cabinet (100);
positioning ribs (120), protruding from the back surface of the front cabinet (100) so as to be in contact with a perimeter of a display panel (90) placed in the front cabinet (100) to position the display panel (90) in the front cabinet (100); and
screwing members (150), with each screwing member (150) having a threaded part (151) capable of being screwed into the threaded hole (132) of each boss of plurality of bosses (131a - 131x), and a pressing part (152), extending about the axis of the threaded part (151);
**characterized in that**
the plurality of bosses (131a -131x) of the holding structure (130) are divided into sets, each of the adjacently arranged bosses (131a - 131x) respectively having different lengths for display panels (90) respectively having different thicknesses,
a display panel (90) is positioned in the front cabinet (100) by the positioning ribs, the screwing members (150) being screwed into the threaded holes (132) of the plurality of bosses (131a -131x) of a length substantially equal to a thickness of a display panel (90) positioned in the front cabinet (100) to hold the display panel (90) fixedly between the back surfaces of the pressing parts (152) of the screwing members (150) and the back surface of the front cabinet (100).

2. The display according to claim 1, wherein a support rib (140) having a length substantially equal to that of each of the bosses (131a - 131 x) is formed near the boss, and the back surface of the pressing part (152) of the screwing member (150) is held near the upper end of the rib (140) when the screwing member (150) is screwed into the threaded hole (132) of the boss.

3. The display according to claim 2, wherein each support rib (140) has a T-shaped top surface.

4. The display according to claim 1 further comprising:
the display panel (90) having the shape of a thin box;
a wiring board (80), for giving received signals to the display panel (90) and for supplying power to the display panel (90), attached to the back surface of the display panel (90);
a rear cabinet (70) joined to a back end of the front cabinet (100); and
support ribs (140) disposed near the bosses (131a -131x), respectively, and each having a length substantially equal to that of the boss adjacent thereto.

5. The display according to claim 1, wherein support ribs (140) respectively having lengths equal to those of the bosses (131a -131x), respectively, are formed near the bosses having the equal lengths, respectively, the pressing parts (152) are washers, each of the support ribs (140) has a T-shaped top surface, the back surfaces of the pressing parts (152) of the screwing members (150) rest on the T-shaped top surfaces of the support ribs (140), respectively, when the screwing members (150) are screwed into the threaded holes (132) of the bosses (131a - 131x), respectively, and the pressing part (152) of each screwing member (150) is provided in its back surface with projections (153) projecting from the back surface so that high frictional force may act between the back surface of the pressing part (152) and the display panel (90).

## Patentansprüche

1. Anzeigevorrichtung (10), die umfasst:
ein vorderes Gehäuse (100), das mit einem im Wesentlichen rechteckigen Ausschnitt (110) versehen ist, in dem eine Vorderseite eines Flachbildschirms (90), der in dem vorderen Gehäuse (100) angeordnet ist, im Wesentlichen freiliegt,
eine Halte-Struktur (130), die eine Vielzahl von Sockeln (131a-131x) mit axial mit Gewinde versehenen Löchern (132) enthält, wobei die Vielzahl von Sockeln (131a-131x) von einer Grenze eines Bildschirm-Haltebereiches an einer Rückseite des vorderen Gehäuses (100) vorstehen;
Positionierrippen (120), die von der Rückseite des vorderen Gehäuses (100) so vorstehen, dass sie in Kontakt mit einem Rand eines Bildschirms (90) sind, der in dem vorderen Gehäuse (100) angeordnet ist, um den Bildschirm (90) in dem vorderen Gehäuse (100) zu positionieren; und
Schraubelemente (150), wobei jedes Schraubelement (150) einen mit Gewinde versehenen Teil (151), der in das mit Gewinde versehene Loch (132) jedes Sockels einer Vielzahl von Sockeln (131a-131x) eingeschraubt werden kann, und einen Pressteil (152) hat, der sich um die Achse des mit Gewinde versehenen Teils (151) herum erstreckt;
**dadurch gekennzeichnet, dass**
die Vielzahl von Sockeln (131a-131x) der Halte-Struktur (130) in Gruppen unterteilt sind, wobei alle der benachbart angeordneten Sockel (131a-131x) jeweils unterschiedliche Länge für Bildschirme (90) haben, die jeweils unterschiedliche Dicke haben,
ein Bildschirm (90) in dem vorderen Gehäuse (100) durch die Positionierrippen positioniert wird, die Schraubelemente (150) in die mit Gewinde versehenen Löcher (130) der Vielzahl von Sockeln (131a-131x) einer Länge eingeschraubt werden, die einer Dicke eines in dem vorderen Gehäuse (100) positionierten Bildschirms (90) gleich ist, um den Bildschirm (90) fest zwischen den Rückseiten der Pressteile (152) der Schraubelemente (150) und der Rückseite des vorderen Gehäuses (100) zu halten.

2. Anzeigevorrichtung nach Anspruch 1, wobei eine Tragerippe (140), die eine Länge hat, die im Wesentlichen der jedes der Sockel (131a-131x) gleich ist, in der Nähe des Sockels ausgebildet ist und die Rückseite des Pressteils (152) des Schraubelementes (150) in der Nähe des oberen Endes der Rippe (140) gehalten wird, wenn das Schraubelement (150) in das mit Gewinde versehene Loch (132) des Sockels eingeschraubt wird.

3. Anzeigevorrichtung nach Anspruch 2, wobei jede Tragerippe (140) eine T-förmige Oberseite hat.

4. Anzeigevorrichtung nach Anspruch 1, die des Weiteren umfasst:
den Bildschirm (90), der die Form eines flachen Kastens hat;
eine Leiterplatte (80), die empfangene Signale an den Bildschirm (90) ausgibt und dem Bildschirm (90) Strom zuführt, und die an der Rückseite des Bildschirms (90) angebracht ist;
ein hinteres Gehäuse (70), das mit einem hinteren Ende des vorderen Gehäuses (100) verbunden ist; und
Tragerippen (140), die jeweils in der Nähe der Sockel (131a-131x) angeordnet sind und jeweils eine Länge haben, die im Wesentlichen der des dazu benachbarten Sockels gleich ist.

5. Anzeigevorrichtung nach Anspruch 1, wobei Tragerippen (140), die jeweils Längen haben, die jeweils denen der Sockel (131a-131x) gleich sind, in der Nähe der Sockel mit den jeweils gleichen Längen ausgebildet sind, die Pressteile (152) Scheiben sind, jede der Tragerippen (140) eine T-förmige Oberseite hat, die Rückseiten der Pressteile (152) der Schraubelemente (150) jeweils auf den T-förmigen Oberseiten der Tragerippen (140) aufliegen, wenn die Schraubelemente (150) jeweils in die mit Gewinde versehenen Löcher (132) der Sockel (131a-131x) eingeschraubt sind, und der Pressteil (152) jedes Schraubelementes (150) an seiner Rückseite mit Vorsprüngen (153) versehen ist, die von der Rückseite vorstehen, so dass starke Reibungskraft zwischen der Rückseite des Pressteils (152) und dem Bildschirm (90) wirken kann.

## Revendications

1. Afficheur (10), comprenant :
un coffret avant (100) pourvu d'une fenêtre sensiblement rectangulaire (110) où une surface avant d'un panneau d'affichage (90) mince disposé dans le coffret avant (100) est sensiblement exposée,
une structure de maintien (130), comprenant une pluralité de bossages (131a à 131x) avec des trous axialement filetés (132), la pluralité de bossages (131a à 131x) faisant saillie d'une frontière d'une zone de maintien de panneau d'affichage sur une surface arrière du coffret avant (100) ;
des nervures de positionnement (120), faisant saillie de la surface arrière du coffret avant (100) de façon à être en contact avec un périmètre d'un panneau d'affichage (90) placé dans le coffret avant (100) afin de positionner le panneau d'affichage (90) dans le coffret avant (100) ; et
des organes de vissage (150), chaque organe de vissage (150) comportant une partie filetée (151) capable d'être vissée dans le trou fileté (132) de chaque bossage de la pluralité de bossages (131a à 131x), et une partie de pression (152) s'étendant autour de l'axe de la partie filetée (151) ;
**caractérisé en ce que**
la pluralité de bossages (131a à 131x) de la structure de maintien (130) est divisée en jeux, chacun des bossages (131a à 131x) agencé de manière adjacente ayant respectivement des longueurs différentes pour des panneaux d'affichage (90) ayant respectivement différentes épaisseurs,
un panneau d'affichage (90) est positionné dans le coffret avant (100) par les nervures de positionnement, les organes de vissage (150) étant vissés dans les trous filetés (132) de la pluralité de bossages (131a à 131x) d'une longueur sensiblement égale à une épaisseur d'un panneau d'affichage (90) positionné dans le coffret avant (100) pour maintenir le panneau d'affichage (90) de manière fixe entre les surfaces arrière des parties de pression (152) des organes de vissage (150) et la surface arrière du coffret avant (100).

2. Afficheur selon la revendication 1, dans lequel une nervure de support (140) ayant une longueur sensiblement égale à celle de chacun des bossages (131a à 131x) est formée près du bossage, et la surface arrière de la partie de pression (152) de l'organe de vissage (150) est maintenue proche de l'extrémité supérieure de la nervure (140) lorsque l'organe de vissage (150) est vissé dans le trou fileté (132) du bossage.

3. Afficheur selon la revendication 2, dans lequel chaque nervure de support (140) a une surface supérieure en forme de T.

4. Afficheur selon la revendication 1, comprenant en outre :
le panneau d'affichage (90) ayant la forme d'un boîtier mince ;
un tableau de connexion (80), permettant de donner des signaux reçus au panneau d'affichage (90) et de fournir de l'électricité au panneau d'affichage (90), fixé à la surface arrière du panneau d'affichage (90) ;
un coffret arrière (70) joint à une extrémité arrière du coffret avant (100) ; et
des nervures de support (140) disposées près des bossages (131a à 131x), respectivement, et ayant chacune une longueur sensiblement égale à celle du bossage qui lui est adjacent.

5. Afficheur selon la revendication 1, dans lequel des nervures de support (140) ayant respectivement des longueurs égales à celles des bossages (131a à 131x), respectivement, sont formées près des bossages ayant des longueurs égales, respectivement, les parties de pression (152) sont des rondelles, chacune des nervures de support (140) a une surface supérieure en forme de T, les surfaces arrière des parties de pression (152) des organes de vissage (150) reposent sur les surfaces supérieures en forme de T des nervures de support (140), respectivement, lorsque les organes de vissage (150) sont vissés dans les trous filetés (132) des bossages (131a à 131x), respectivement, et la partie de pression (152) de chaque organe de vissage (150) est pourvue dans sa surface arrière de saillies (153) faisant saillie de la surface arrière de sorte qu'une force de frottement élevée peut agir entre la surface arrière de la partie de pression (152) et le panneau d'affichage (90).
